# EUROPEAN PATENT APPLICATION

(11) **EP 4 507 368 A1**
(43) Date of publication of application: **12.02.2025**
(21) Application number: 23827313.0
(22) Date of filing: 20.01.2023
(51) Int. Cl.: H04W 28/02, H04W 76/10, H04W 8/02, H04W 80/00

(54) **METHOD AND APPARATUS FOR REDUCING TRANSMISSION OVERHEAD AND DELAY OF CONTROL PLANE IN WIRELESS COMMUNICATION SYSTEM**

(30) Priority: 24.06.2022 KR 20220077584
(71) Applicant: Samsung Electronics Co., Ltd., Suwon-si, Gyeonggi-do 16677 (KR)
(72) Inventor: CHOI, Jinho, Suwon-si, Gyeonggi-do 16677 (KR); KIM, Dongmyung, Suwon-si, Gyeonggi-do 16677 (KR); JUNG, Jungsoo, Suwon-si, Gyeonggi-do 16677 (KR); CHA, Jiyoung, Suwon-si, Gyeonggi-do 16677 (KR)
(74) Representative: Nederlandsch Octrooibureau
(86) International application number: PCT/KR2023/001004
(87) International publication number: WO 2023/249190

(57) **Abstract**

The present disclosure relates to a 6G communication system for supporting a higher data transmission rate. According to various embodiments of the present disclosure, provided is a method for operating a radio access network (RAN) comprising a distributed unit (DU) and a centralized unit (CU), the DU comprising a radio link control (RLC) and the CU comprising a radio resource control (RRC), and the method comprises the steps of: establishing an RRC connection with a user equipment (UE); transmitting, to an access mobility function (AMF), a non-access stratum (NAS) connection establishment request message including information about the UE; receiving, from the AMF, initial configuration information including routing information about network functions (NFs) corresponding to the UE, the NFs comprising the AMF, a session management function (SMF), and a policy control function (PCF); transmitting, to the UE, RRC connection re-configuration information including the routing information about the NFs corresponding to the UE; receiving, through the DU, a control message including address information about one of the NFs from the UE; and transmitting the control message to the NF.

## Description

### [Technical Field]

The disclosure generally relates to a wireless communication system and, more particularly, to a method and an apparatus for reducing transmission overhead and delay of a control plane in a wireless communication system.

### [Background Art]

Considering the development of mobile communication from generation to generation shows that the development has mostly been directed to technologies for services targeting humans, such as voice-based services, multimedia services, and data services. It is expected that connected devices which are exponentially increasing after commercialization of 5th generation (5G) communication systems will be connected to communication networks. Examples of things connected to networks may include vehicles, robots, drones, home appliances, displays, smart sensors installed in various infrastructures, construction machines, factory equipment, and the like. Mobiles devices are expected to evolve into various formfactors such as augmented reality glasses, virtual reality headsets, and hologram devices. In order to provide various services by connecting hundreds of billions of devices and things in the 6th generation (6G) era, there have been ongoing efforts to develop improved 6G communication systems. For these reasons, 6G communication systems are referred to as "beyond-5G" systems.

6G communication systems, which are expected to be implemented approximately by 2030, will have a maximum transmission rate of tera (1,000 giga)-level bps and a radio latency of 100µsec, and thus will be 50 times as fast as 5G communication systems and have the 1/10 radio latency thereof.

In order to accomplish such a high data transmission rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, a technology capable of securing the signal transmission distance, that is, coverage, will become more crucial. It is necessary to develop, as major technologies for securing the coverage, multiantenna transmission technologies including radio frequency (RF) elements, antennas, novel waveforms having a better coverage than orthogonal frequency division multiplexing (OFDM), beamforming and massive MIMO, full dimensional MIMO (FD-MIMO), array antennas, and large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the frequency efficiencies and system networks, the following technologies have been developed for 6G communication systems: a full-duplex technology for enabling an uplink (UE transmission) and a downlink (node B transmission) to simultaneously use the same frequency resource at the same time; a network technology for utilizing satellites, high-altitude platform stations (HAPS), and the like in an integrated manner; a network structure innovation technology for supporting mobile nodes B and the like and enabling network operation optimization and automation and the like; a dynamic spectrum sharing technology though collision avoidance based on spectrum use prediction, an artificial intelligence (AI)-based communication technology for implementing system optimization by using AI from the technology design step and internalizing end-to-end AI support functions; and a next-generation distributed computing technology for implementing a service having a complexity that exceeds the limit of UE computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through the hyper-connectivity of 6G communication systems that covers both connections between things and connections between humans and things. Specifically, it is expected that services such as truly immersive XR, high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

### [Disclosure of Invention]

### [Technical Problem]

Based on the foregoing discussion, various embodiments of disclosure are to provide a method and an apparatus for reducing transmission overhead and delay of a control plane in a wireless communication system.

### [Solution to Problem]

According to various embodiments of the disclosure, there is provided an operating method of a radio access network (RAN) including a distributed unit (DU) and a centralized unit (CU) in a wireless communication system, the DU including a radio link control (RLC) and the CU including a radio resource control (RRC), the method including: establishing an RRC connection with a user equipment (UE); transmitting a non-access stratum (NAS) connection establishment request message including information about the UE to an access mobility function (AMF); receiving initial configuration information including routing information about network functions (NFs) corresponding to the UE from the AMF, the NFs including the AMF, a session management function (SMF), and a policy control function (PCF); transmitting RRC connection reconfiguration information including the routing information about the NFs corresponding to the UE to the UE; receiving a control message including address information about one NF among the NFs from the UE through the DU; and transmitting the control message to the NF.

According to various embodiments of the disclosure, there is provided a radio access network (RAN) including a distributed unit (DU) and a centralized unit (CU) in a wireless communication system, the DU including a radio link control (RLC) and the CU including a radio resource control (RRC), the RAN including a transceiver and at least one processor functionally connected to the transceiver, wherein the at least one processor is configured to: establish an RRC connection with a user equipment (UE); transmit a non-access stratum (NAS) connection establishment request message including information about the UE to an access mobility function (AMF); receive initial configuration information including routing information about network functions (NFs) corresponding to the UE from the AMF, the NFs including the AMF, a session management function (SMF), and a policy control function (PCF); transmit RRC connection reconfiguration information including the routing information about the NFs corresponding to the UE to the UE; receive a control message including address information about one NF among the NFs from the UE through the DU; and transmit the control message to the NF.

According to various embodiments of the disclosure, there is provided an operating method of a user equipment (UE) in a wireless communication system, the method including: establishing a radio resource control (RRC) connection with a radio access network (RAN); receiving RRC connection reconfiguration information including routing information about network functions (NFs) corresponding to the UE from the RAN, the NFs including the access mobility function (AMF), a session management function (SMF), and a policy control function (PCF); and transmitting a control message including address information about one NF among the NFs to the RAN.

### [Advantageous Effects of Invention]

Based on the foregoing discussion, various embodiments of disclosure are to provide a method and an apparatus for reducing transmission overhead and delay of a control plane in a wireless communication system.

Advantageous effects obtainable from the disclosure may not be limited to the above-mentioned effects, and other effects which are not mentioned may be clearly understood from the following descriptions by those skilled in the art to which the disclosure pertains.

### [Brief Description of Drawings]

FIG. 1 illustrates a wireless communication system according to various embodiments of the disclosure;
FIG. 2 illustrates a structure of a base station in a wireless communication system according to various embodiments of the disclosure.
FIG. 3 illustrates a structure of a UE in a wireless communication system according to various embodiments of the disclosure.
FIG. 4 illustrates an example of a 5G control message layer and transmission structure;
FIG. 5 illustrates an example of a 5G control message layer and transmission structure;
FIG. 6 illustrates an example of a control message layer and transmission structure in a wireless communication system according to various embodiments of the disclosure;
FIG. 7 illustrates an example of a control message layer and transmission structure in a wireless communication system according to various embodiments of the disclosure;
FIG. 8 illustrates an example of a 5G control message layer and transmission structure;
FIG. 9 illustrates an example of a control message layer and transmission structure in a wireless communication system according to various embodiments of the disclosure;
FIG. 10 illustrates an example of a process of transmitting dedicated SRB generation information in a wireless communication system according to various embodiments of the disclosure;
FIG. 11 illustrates an example of a control message layer and transmission structure in a wireless communication system according to various embodiments of the disclosure;
FIG. 12 illustrates an example of a process in which an NF transmits routing information to a device (RRC in 5G) in charge of configuring an SRB in a wireless communication system according to various embodiments of the disclosure;
FIG. 13 illustrates an example of an SRB configuration including routing information in a wireless communication system according to various embodiments of the disclosure;
FIG. 14 illustrates an example of an SRB configuration including routing information in a wireless communication system according to various embodiments of the disclosure;
FIG. 15 illustrates an example of RadioBearerConfig in a wireless communication system according to various embodiments of the disclosure;
FIG. 16 illustrates an example of a process in which an RAN device in charge of classifying a control message exchanges control messages with NFs in a wireless communication system according to various embodiments of the disclosure;
FIG. 17 illustrates an example of a process in which an RAN device in charge of classifying a control message exchanges control messages with NFs in a wireless communication system according to various embodiments of the disclosure;
FIG. 18 illustrates an example of a process in which an NF newly provides a PDCP configuration service (e.g., NF PDCP configuration) callable by an RAN device in a wireless communication system according to various embodiments of the disclosure;
FIG. 19 illustrates an example of a process in which an RLC (DU) distinguishes and transmits AS/NAS messages by using an SRB in a wireless communication system according to various embodiments of the disclosure;
FIG. 20 illustrates an example of a process in which a PDCP (CU) distinguishes and transmits AS/NAS messages by using an SRB in a wireless communication system according to various embodiments of the disclosure;
FIG. 21 illustrates an example of a process in which an RRC (CU) distinguishes and transmits NAS messages by using an SRB in a wireless communication system according to various embodiments of the disclosure; and
FIG. 22 illustrates an example of a process in which an RRC (CU) distinguishes and transmits NAS messages by using an RRC IE in a wireless communication system according to various embodiments of the disclosure.

### [Mode for the Invention]

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

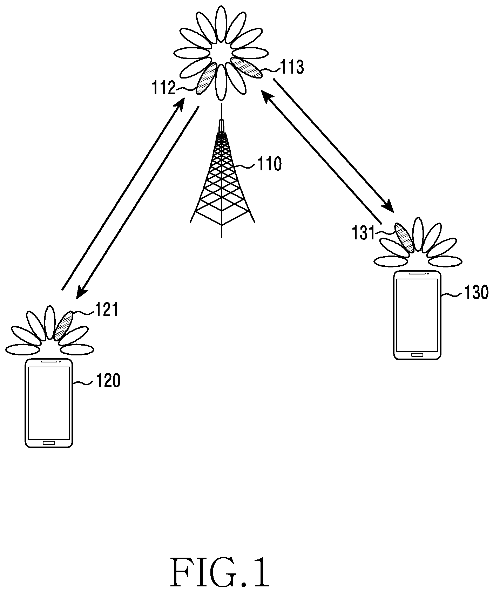

FIG. 1 illustrates a wireless communication system according to various embodiments of the disclosure. FIG. 1 illustrates a base station 110, a UE 120, and a UE 130 as some nodes using a wireless channel in the wireless communication system. Although FIG. 1 shows only one base station, another base station equivalent or similar to the base station 110 may be further included.

The base station 110 is a piece of network infrastructure that provides wireless access for the UEs 120 and 130. The base station 110 has coverage defined as a certain geographic area based on the distance over which the base station 110 is able to transmit a signal. The base station 110 may be referred to as an access point (AP), an eNodeB (eNB), a 5th-generation (5G) node, a next-generation nodeB (gNB), a wireless point, a transmission/reception point (TRP), or other terms with equivalent technical meanings, in addition to a base station.

Each of the UE 120 and the UE 130 is a device used by a user, and performs communication with the base station 110 through a wireless channel. In some cases, at least one of the UE 120 and the UE 130 may be operated without a user's involvement. That is, at least one of the UE 120 and the UE 130 may be a device performing machine-type communication (MTC), and may not be carried by a user. Each of the UE 120 and the UE 130 may be referred to as a terminal, a mobile station, a subscriber station, a remote terminal, a wireless terminal, a user device, or other terms with equivalent technical meanings, in addition to a UE.

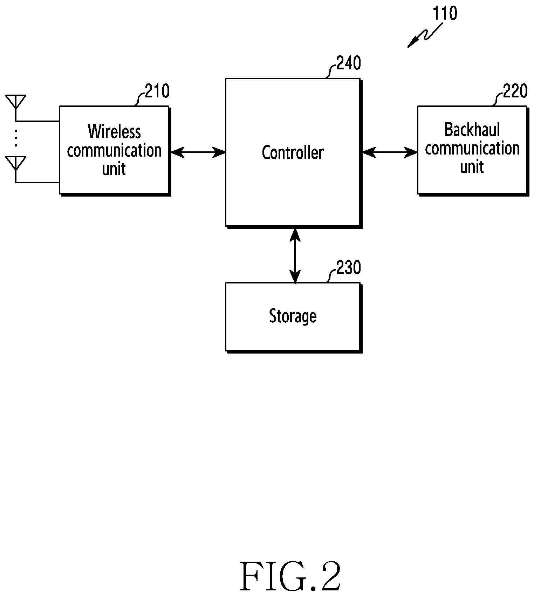

FIG. 2 illustrates a structure of a base station in a wireless communication system according to various embodiments of the disclosure. The structure illustrated in FIG. 2 may be understood as a structure of the base station 110. As used herein, the term "... unit", "... er", or the like refers to a unit configured to process at least one function or operation, and may be implemented as hardware, software, or a combination of hardware and software.

Referring to FIG. 2, the base station includes a wireless communication unit 210, a backhaul communication unit 220, a storage 230, and a controller 240.

The wireless communication unit 210 performs functions for transmitting/receiving signals through a radio channel. For example, the wireless communication unit 210 performs functions of conversion between baseband signals and bitstrings according to the physical layer specifications of the system. For example, during data transmission, the wireless communication unit 210 encodes and modulates a transmitted bitstring to generate complex symbols. In addition, during data reception, the wireless communication unit 210 demodulates and decodes a baseband signal to reconstruct a received bitstring.

In addition, the wireless communication unit 210 up-converts a baseband signal to an RF band signal, transmits the same through an antenna, and down-converts an RF band signal received through the antenna to a baseband signal. To this end, the wireless communication unit 210 may include a transmission filter, a reception filter, an amplifier, a mixer, an oscillator, a digital to analog converter (DAC), an analog to digital converter (ADC), and the like. In addition, the wireless communication unit 210 may include multiple transmission/reception paths. Furthermore, the wireless communication unit 210 may include at least one antenna array including multiple antenna elements.

In terms of hardware, the wireless communication unit 210 may include a digital unit and an analog unit, and the analog unit may include multiple sub-units according to operation power, frequencies, etc. The digital unit may be implemented by at least one digital signal processor (DSP).

The wireless communication unit 210 transmits and receives signals as described above. Accordingly, all or part of the wireless communication unit 210 may be referred to as a "transmitter", a "receiver", or a "transceiver". In addition, as used in the following description, the meaning of "transmission and reception performed through a radio channel" includes the meaning that the above-described processing is performed by the wireless communication unit 210.

The backhaul communication unit 220 provides an interface for performing communication with other nodes in the network. That is, the backhaul communication unit 220 converts a bitstring, transmitted from the base station to any other node, for example, any other access node, any other base station, an upper node, or a core network, into a physical signal, and converts a physical signal, received from any other node, into a bitstring.

The storage 230 stores data such as basic programs, application programs, and configuration information for operations of the base station. The storage 230 may include a volatile memory, a nonvolatile memory, or a combination of a volatile memory and a nonvolatile memory. In addition, the storage unit 230 provides the stored data at the request of the controller 240.

The controller 240 controls the overall operation of the base station. For example, the controller 240 transmits/receives signals through the wireless communication unit 210 or the backhaul communication unit 220. In addition, the controller 240 records data in the storage 230 and reads the data from the storage 230. Furthermore, the controller 240 may perform functions of protocol stacks required by communication specifications. According to another embodiment, the protocol stacks may be included in the wireless communication unit 210. To this end, the controller 240 may include at least one processor.

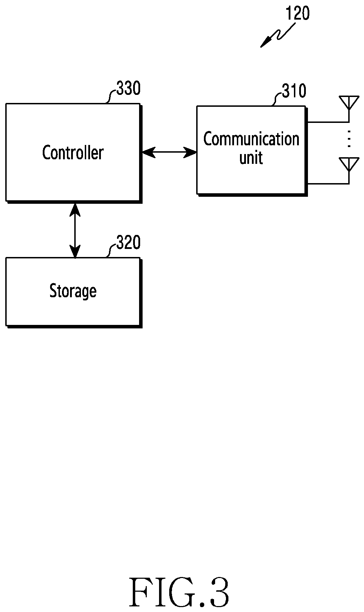

FIG. 3 illustrates a structure of a UE in a wireless communication system according to various embodiments of the disclosure. The structure illustrated in FIG. 3 may be understood as a structure of the UE 120. As used herein, the term "... unit", "... er", or the like refers to a unit configured to process at least one function or operation, and may be implemented as hardware, software, or a combination of hardware and software.

Referring to FIG. 3, the UE may include a communication unit 310, a storage 320, and a controller 330.

The communication unit 310 performs functions for transmitting/receiving signals through a radio channel. For example, the communication unit 310 performs functions of conversion between baseband signals and bitstrings according to the physical layer specifications of the system. For example, during data transmission, the communication unit 310 encodes and modulates a transmitted bitstring to generate complex symbols. In addition, during data reception, the communication unit 310 demodulates and decodes a baseband signal to restore a received bitstring. In addition, the communication unit 310 up-converts a baseband signal to an RF band signal, transmits the same through an antenna, and down-converts an RF band signal received through the antenna to a baseband signal. For example, the communication unit 310 may include a transmission filter, a reception filter, an amplifier, a mixer, an oscillator, a DAC, an ADC, and the like.

In addition, the communication unit 310 may include multiple transmission/reception paths. Moreover, the communication unit 310 may include at least one antenna array including multiple antenna elements. In terms of hardware, the communication unit 310 may include a digital circuit and an analog circuit (for example, a radio frequency integrated circuit (RFIC)). The digital circuit and the analog circuit may be implemented as a single package. In addition, the communication unit 310 may include multiple RF chains. Furthermore, the communication unit 310 may perform beamforming.

The communication unit 310 transmits and receives signals as described above. Accordingly, all or part of the communication unit 310 may be referred to as a "transmitter", a "receiver", or a "transceiver". In addition, as used in the following description, the meaning of "transmission and reception performed through a radio channel" includes the meaning that the above-described processing is performed by the communication unit 310.

The storage 320 stores data such as basic programs, application programs, and configuration information for operations of the UE. The storage 320 may include a volatile memory, a nonvolatile memory, or a combination of a volatile memory and a nonvolatile memory. In addition, the storage 320 provides the stored data at the request of the controller 330.

The controller 330 controls the overall operation of the UE. For example, the controller 330 transmits/receives signals through the communication unit 310. In addition, the controller 330 records data in the storage 320 and reads the data from the storage unit 320. In addition, the controller 330 may perform functions of protocol stacks required by communication specifications. To this end, the controller 330 may include at least one processor or microprocessor, or may be a part of a processor. In addition, a part of the communication unit 310 and the controller 330 may be referred to as a communication processor (CP).

The following various embodiments of the disclosure relate to a method and an apparatus for reducing control plane transmission overhead and delay of an RAN using a service-based interface (SBI).

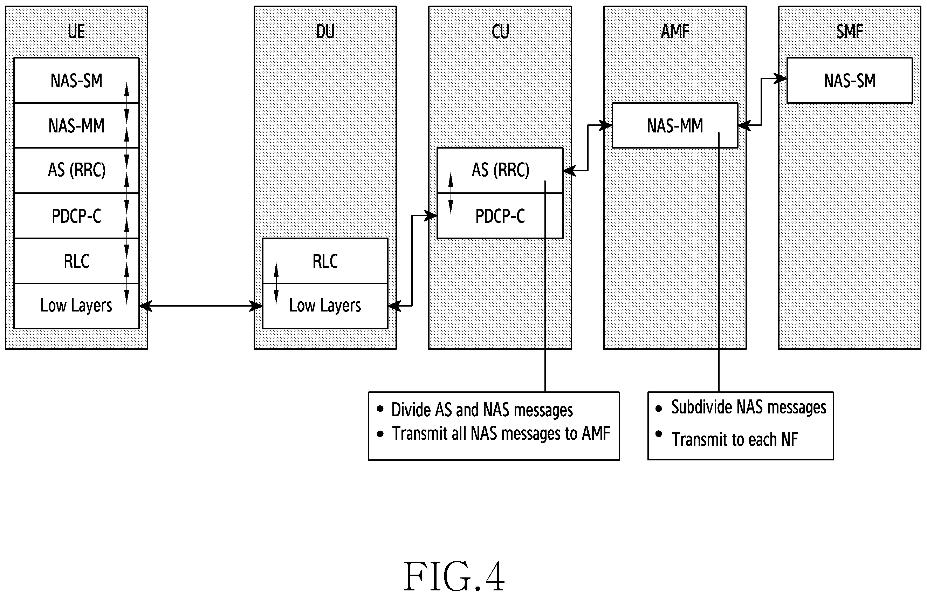

FIG. 4 illustrates an example of a 5G control message layer and transmission structure.

Referring to FIG. 4, the 5G control message layer and transmission structure is disclosed.

A message is transmitted between a user equipment (UE) and a radio access network (RAN), a message is transmitted between the RAN and an access and mobility function (AMF), and a message is transmitted between the AMF and a session management function (SMF). The RAN includes a distributed unit (DU) and a centralized unit (CU).

According to a constraint of 5G, each control layer needs to go through a fixed lower layer in accordance with the hierarchical structure of an existing control signal when transmitting the control signal. For example, single NAS-SM communication between the UE and the SMF also needs to go through an NAS-MM layer (AMF) and an AS layer (RRC). As a result, problems, such as overhead in duplicate message generation/transmission per layer and additional transmission delay due to unnecessarily goring through an NF, arise when transmitting control messages. To reduce the overhead, a control message transmission method for minimizing layers through which each layer communication goes is needed. Accordingly, various embodiments of the disclosure propose a method, a structure, and a procedure for directly transmitting a control message from a lower layer of the RAN to a destination.

A service-based interface (SBI) has been applied to the existing 5G core network, but has not yet been applied to the RAN. From a 5G perspective, the RAN includes the DU and the CU, and network functions from the AMF may be considered as the core network. From the perspective of the network transmitting a message, a structure is established in which any device is able to freely communicate when the SBI is applied. With the evolution of the network, a protocol has a set hierarchical structure. Conventionally, when the UE transmits a message to the network, the CU may first distinguish whether the message goes to an NAS layer, and may transmit the message going to the core only to the AMF. When the message is transmitted to the AMF, the AMF transmits the control message in a form of distinguishing again whether the message is a message that the AMF needs to autonomously process or a message to be processed by another entity in the core. Accordingly, there is overhead in generating the message again to exchange the message between layers. Further, since it is necessary to go through a fixed path, an additional problem of a transmission delay arises while passing through NFs.

Various embodiments of the disclosure provide a method and an apparatus for solving the foregoing problems.

A first proposed method according to various embodiments of the disclosure is a method for a lower layer of an RAN (compared to the existing) to distinguish the destination of a control message.

Method 1 of the first proposed method according to various embodiments of the disclosure is a method for distinguishing the destination of all higher control messages by using an SRB and an RLC channel ID (RCID). Specifically, proposed is a method for use in a structure in which a control message is transmitted to a destination without going through an AS (RRC) layer or higher.

Method 2 of the first proposed method according to various embodiments of the disclosure is a method for distinguishing the destination of an NAS message by introducing a layer identifier into an AS message. Specifically, proposed is a method for use in a structure in which an NAS message is transmitted without going through an NAS-MM (AMF) layer while going through an AS (RRC) layer.

A second proposed method according to various embodiments of the disclosure is a method for configuring information required for the actual transmission of a control message distinguished by the first proposed method. Specifically, proposed is an information configuration method for an RAN device to transmit a message to each NF by using a service-based interface (SBI). In addition, proposed is a method in which a network (NW) notifies a UE of a layer that distinguishes a control message.

As expected effects according to various embodiments of the disclosure, a decrease in message generation overhead of each lower layer arising when transmitting a control message may be expected, and a decrease in transmission delay of a control signal may be expected due to the transmission of the control message to a destination through the shortest transmission path.

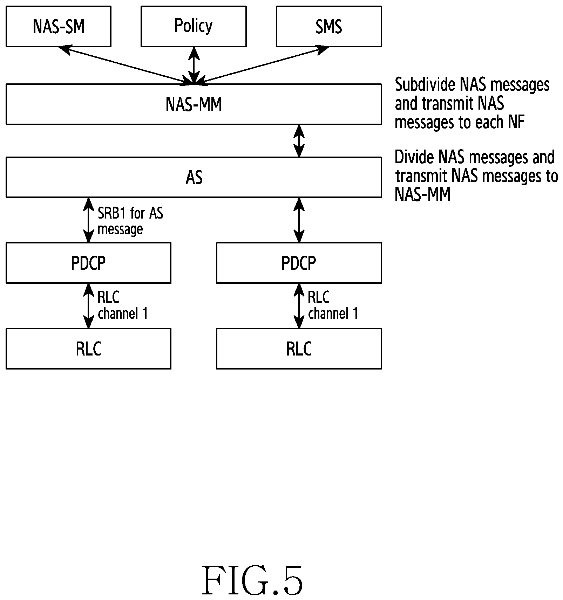

FIG. 5 to FIG. 7 are views for illustrating a method in which a lower layer distinguishes and transmits all layer-3 (L3) control messages by using an SRB and an RCID.

According to various embodiments of the disclosure, PDCP layers of a UE and an NW selectively provide a unique SRB directly connected to each L3 control layer. All L3 layers may also use a common SRB in a form provided in the existing 5G structure, and message transmission through the common SRB is the same as in 5G. In the existing 5G structure, all SRBs are connected to an AS layer, and are divided for AS message transmission and NAS message transmission.

According to various embodiments of the disclosure, when one L3 layer needs to generate a plurality of connections, the following methods may be selected for distinguishing messages. In a first method, the PDCP layers additionally provide a separate unique SRB for the connections. In a second method, RLC layers additionally provide an RLC channel within a dedicated SRB of the layer. In this case, the L3 layer provides information so that the PDCP is able to identify a connection to which a transmitted message belongs. Each RLC channel has a unique ID within a PDCP to which the RLC channel belongs.

FIG. 5 illustrates an example of a 5G control message layer and transmission structure.

In the existing 5G structure, all SRBs are connected to an AS layer, and are divided for AS message transmission and NAS message transmission.

Referring to FIG. 5, the 5G layer structure is maintained as it is. An RLC layer and a PDCP layer correspond to a transport layer. An AS layer exists above the RLC layer and the PDCP layer, and an NAS-MM layer exists above the AS layer. The NAS-MM layer includes an AMF in a network. All layers are displayed in a UE. A structure is such that each entity is able to communicate only with the layer immediately below in each layer. A message is transmitted to the PDCP layer and the RLC layer via an NAS-SM layer, the NAS-MM layer, and the AS layer. Conventionally, messages using an SRB are also distinguished, but are limited to the purpose of distinguishing a message of an RAN or a message of a core.

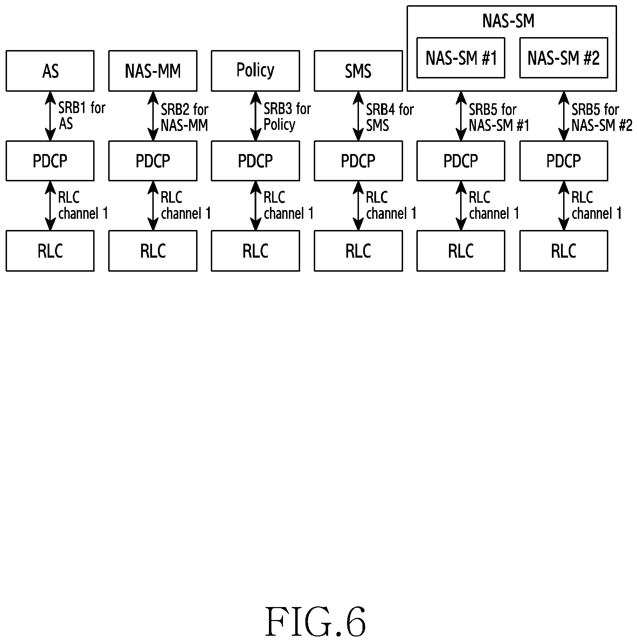

FIG. 6 illustrates an example of a control message layer and transmission structure in a wireless communication system according to various embodiments of the disclosure.

The embodiment of FIG. 6 illustrates a first method for distinguishing a message when one L3 layer needs to generates a plurality of connections, in which a PDCP layer additionally provides a separate unique SRB for the connections.

Referring to FIG. 6, a structure is illustrated in which all L3 control plane entities are spread and dedicated SRBs are allocated therefor. The structure allocates both a PDCP and an RLC for the dedicated SRBs. Specifically, the structure enables the destination of a message to be immediately determined through information about an SRB through which the message is transmitted when a UE transmits a message.

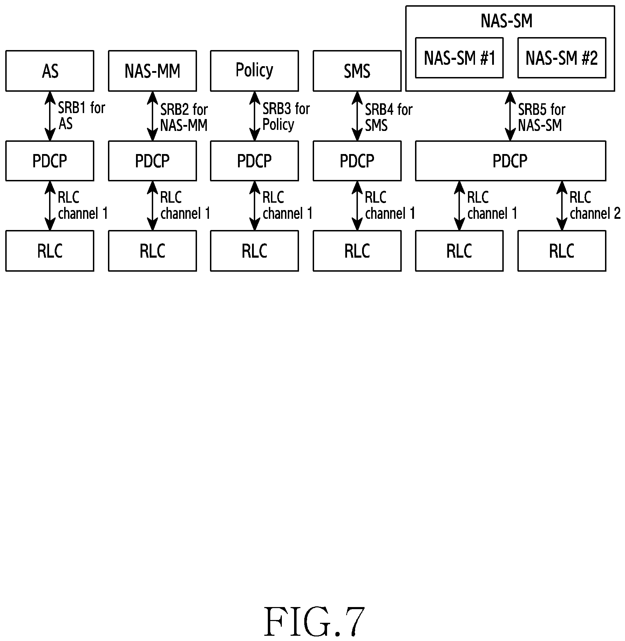

FIG. 7 illustrates an example of a control message layer and transmission structure in a wireless communication system according to various embodiments of the disclosure.

The embodiment of FIG. 7 illustrates a second method for distinguishing a message when one L3 layer needs to generates a plurality of connections, in which an RLC layer additionally provides an RLC channel within a dedicated SRB of the layer. In this case, the L3 layer provides information so that a PDCP may identify a connection to which a transmitted message belongs. Each RLC channel has a unique ID within the PDCP to which the RLC channel belongs.

Referring to FIG. 7, a structure is illustrated in which when there is a plurality of SMs, only large classification is performed into an SM or an MM, one SRB is first allocated for all SMs, and detailed SM entities are divided into lower RLC channels.

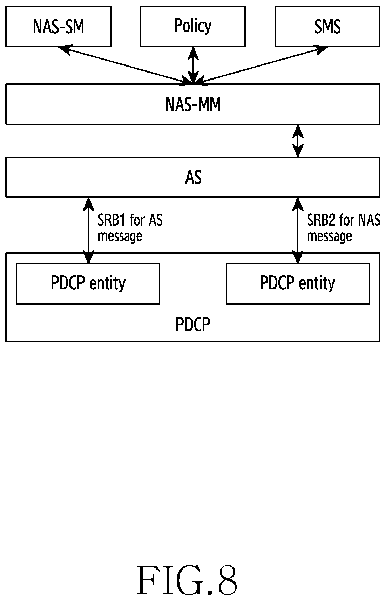

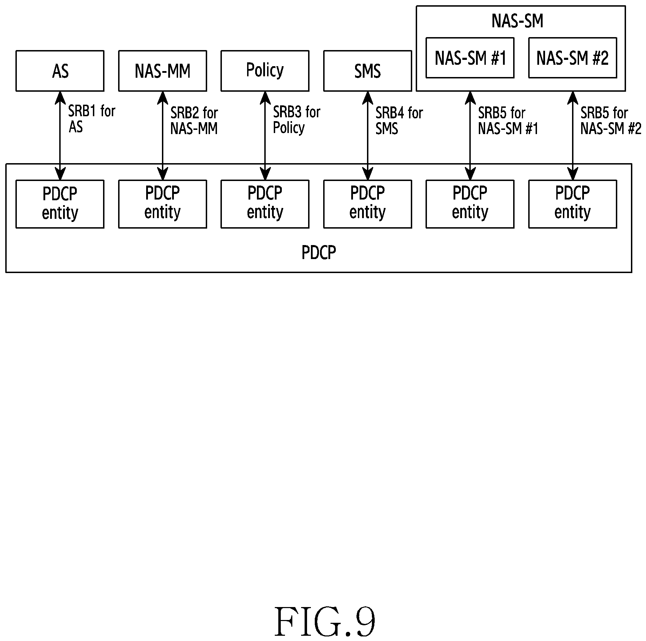

FIG. 8 and FIG. 9 are views for illustrating a method in which PDCP layers of both a UE and an NW generate a PDCP entity in charge of an SRB in relation to the configuration of a dedicated SRB and provide a dedicated connection between each entity and a corresponding L3 layer.

FIG. 8 illustrates an example of a 5G control message layer and transmission structure.

Referring to FIG. 8, in the existing 5G method, a message transmission order is fixed and operates such that an AS is the first, an NAS is the second, and a policy is the third.

FIG. 9 illustrates an example of a control message layer and transmission structure in a wireless communication system according to various embodiments of the disclosure.

Referring to FIG. 9, as a method in which a PDCP operates an SRB, a first method or a second method may be selected. The first method is a method of dynamically operating all SRBs, in which each SRB is distinguished by an arbitrary number allocated when first generated. The second method is a method of operating a fixed SRB and a dynamic SRB together, in which specific numbers are fixedly allocated to some SRBs and a number is dynamically allocated to an SRB when the SRB is additionally generated. For example, for all UEs, SRB1 is fixedly allocated to a UE-RRC connection, SRB2 to a UE-AMF connection, and SRB3 to a UE-SMF connection, after which when a specific UE needs an additional SMF connection, an additional SRB is dynamically allocated, such as SRB 10 to UE-SMF#2.

That is, the first method in the embodiment of FIG. 9 is a method of completely dynamically generating an SRB when the SRB is first generated. The second method is a method of fixedly allocating a number to a frequently used SRB and dynamically allocating a number to an additionally generated SRB.

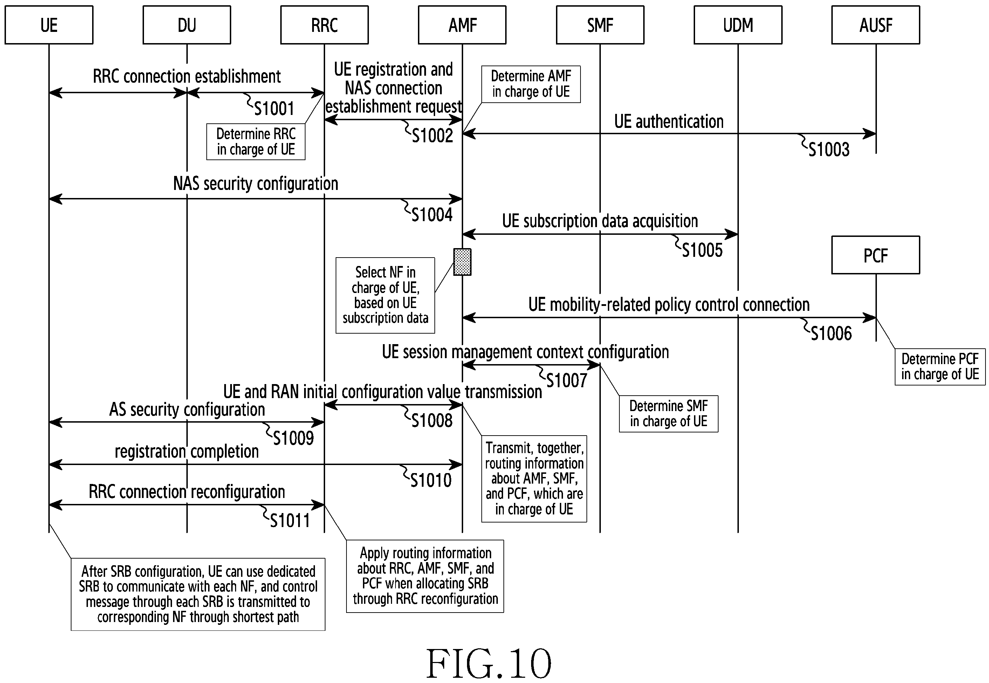

FIG. 10 illustrates an example of a process of transmitting dedicated SRB generation information in a wireless communication system according to various embodiments of the disclosure.

Referring to FIG. 10, a dedicated SRB may be generated after an NF in charge of a UE is determined.

The embodiment of FIG. 10 illustrates a process of identifying dedicated SRB generation information by using a registration procedure of a 5G mobile communication network as an example. In a process of performing a registration procedure of a UE, an NF in charge of the UE is determined by stages. When transmitting initial context of the UE and an RAN to an RRC, an AMF also transmits routing information about the NF in charge. The RRC configures a dedicated SRB including the routing information about the NF by using the transmitted information.

Referring to FIG. 10, in the existing registration procedure, when a UE establishes an RRC connection, an RRC in charge of the UE is determined, and in the process, an NF to be in charge of the UE is determined through each operation whenever initial communication with NFs is performed. When a setup for the UE is transmitted once at the end in the registration of the UE, if routing information about each entity is collected and transmitted at once, the UE may separately transmit each message to be transmitted to a specific entity through each SRB after the registration is completed.

Referring to FIG. 10, in operation S1001, a UE, a DU, and an RRC establish an RRC connection. Accordingly, the RRC in charge of the UE is determined.

In operation S1002, the RRC and an AMF perform UE registration, and request NAS connection establishment. Accordingly, the AMF in charge of the UE is determined.

In operation S1003, the AMF and an AUSF perform UE authentication.

In operation S1004, the UE and the AMF perform NAS security configuration.

In operation S1005, the AMF and a UDM obtain UE subscription data. Accordingly, the AMF selects an NF in charge of the UE, based on the UE subscription data.

In operation S1006, the AMF and a PCF perform a UE mobility-related policy control connection. Accordingly, the PCF in charge of the UE is determined.

In operation S1007, the AMF and an SMF perform UE session management context configuration. Accordingly, the SMF in charge of the UE is determined.

In operation S1008, the RRC and the AMF perform UE and RAN initial configuration value transmission. Here, routing information about the AMF, the SMF, and the PCF in charge of the UE is also transmitted.

In operation S1009, the UE and RRC perform AS security configuration.

In operation S1010, the UE and the AMF perform registration completion.

In operation S1011, the UE and the RRC perform RRC connection reestablishment. In a process of allocating an SRB through the RRC connection reestablishment, routing information about the RRC, the AMF, the SMF, and the PCF is applied.

After configuring SRBs, the UE may use a dedicated SRB when performing communication with each NF. A control message through each SRB may be transmitted to a corresponding NF through the shortest path.

The embodiments of FIG. 4 to FIG. 10 have proposed a method of distinguishing a control message by using an SRB or an RLC channel ID.

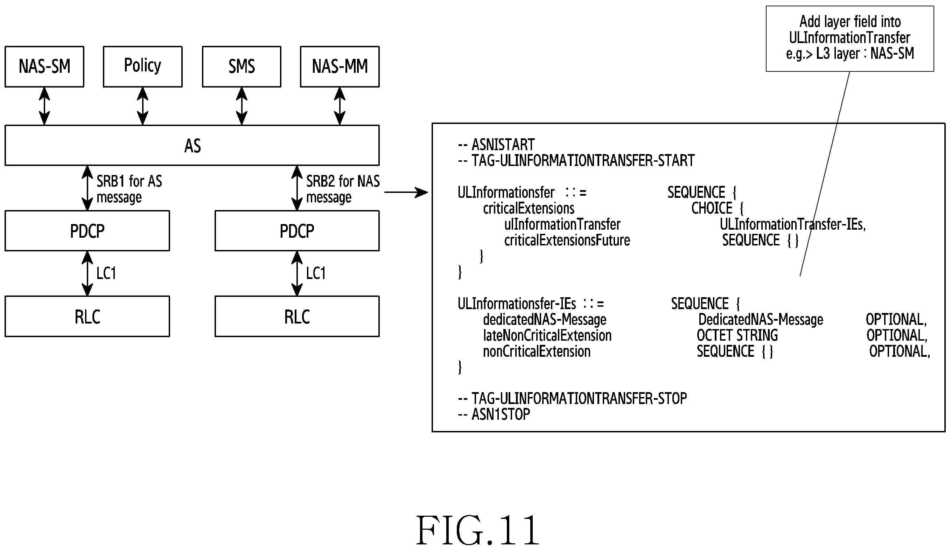

FIG. 11 illustrates an example of a control message layer and transmission structure in a wireless communication system according to various embodiments of the disclosure.

Referring to FIG. 11, proposed is a method of distinguishing an NAS message in detail by introducing a layer identifier in an AS message. An AS layer provides a distinguished service access point (SAP) for each higher layer and distinguishes a message for each layer through a received SAP. When transmitting an L3 control message, the AS layer also transmits information indicating a layer transmitting the message. However, in the existing 5G structure, all NAS messages are transmitted to an NAS-MM layer, and thus there is no identifier.

The embodiment of FIG. 11 illustrates a method of distinguishing a control message with an AS message. The method of FIG. 11 is different from the method of the embodiments up to FIG. 10 as follows.

In the method of the embodiments up to FIG. 10, all layers are spread without distinguishing an AS and an NAS. However, in the embodiment of FIG. 11, the existing structure remains the same up to the AS layer, but only an NAS layer above the AS layer is spread by removing a priority. That is, the method enables transmission up to an RRC layer as in the existing 5G structure, and direct transmission to another NF by branching from the RRC layer. Here, the AS layer is used for exchanging existing RRC messages. The embodiment of FIG. 11 has a feature such that when transmitting a corresponding higher-layer message in an RRC message, a new information field is generated for the destination of the message to transmit content along with the message.

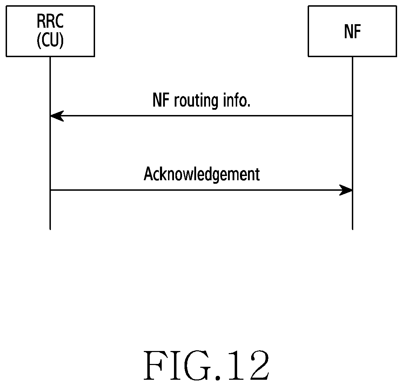

Embodiments of FIG. 12 to FIG. 14 propose a method for configuring information to enable an RAN device to directly transmit a message to each NF by using an SBI.

FIG. 12 illustrates an example of a process in which an NF transmits routing information to a device (RRC in 5G) in charge of configuring an SRB in a wireless communication system according to various embodiments of the disclosure.

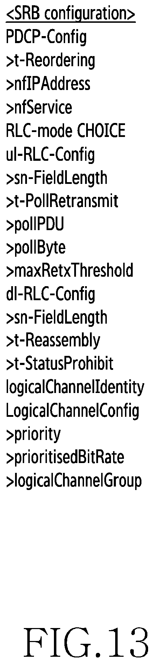

FIG. 13 illustrates an example of an SRB configuration including routing information in a wireless communication system according to various embodiments of the disclosure.

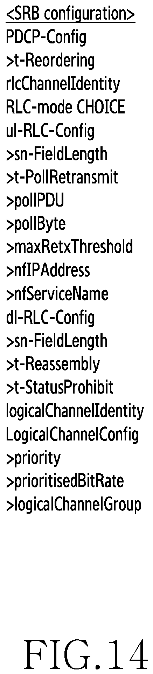

FIG. 14 illustrates an example of an SRB configuration including routing information in a wireless communication system according to various embodiments of the disclosure.

Referring to FIG. 12, proposed is a method for configuring information to enable an RAN device to directly transmit a message to each NF by using an SBI. To transmit a control message by using an SBI, the physical address of a destination NF and the name of a service (function) to be called need to be identified. Here, the service refers to various functions (functionality) provided by each NF through an SBI. For example, the service includes a data identification service, a data modification service, and a data generation service.

A process in which an NF transmits routing information to a device (RRC in 5G) in charge of configuring an SRB is as follows. First, the NF transmits a new NF routing information message including information of an NF type, an NF ID, an IP address, and an NF service list to the RRC (CU). Next, the RRC performs service discovery to an NRF. Subsequently, when a UE is first registered, an AMF identifies and reports connection information about a connected NF.

The device (RRC in 5G) in charge of configuring the SRB also applies the routing information when configuring a dedicated SRB and an RLC bearer. The routing information includes information (e.g., nflP Address or destinationID) required to map a message through each SRB or RLC bearer to an actual physical address. Further, optionally, the routing information may further include information (e.g., nfServiceName) for distinguishing the name of a service to be called among a plurality of services provided by each NF.

The routing information may be configured in a unit of SRB or RLC channel.

Example 1 of FIG. 13 shows a case in which the routing information is configured in a unit of SRB. In an SRB configuration of example 1, PDCP-Config includes nflPAddress and nfService.

Example 2 of FIG. 14 shows a case in which the routing information is configured in a unit of RLC. In an SRB configuration of example 2, PDCP-Config includes rlcChannelIdentity, and ul-RLC-Config includes nfIPAddress and nfServiceName.

When the routing information is changed due to NF relocation or the like, the changed information is identified again by the routing information transmission method, and the RRC performs an update through reconfiguration and a UE context update.

When the RRC is changed due to the movement of the UE, the UE and bearer context applied by a handover procedure are transmitted from a source RRC to a target RRC, and the target RRC re-establishes an SRB, based on a corresponding setting value.

According to the foregoing embodiments of distinguishing a control message by using an SRB or an RLC channel ID, it is possible to know where a control message is transmitted regardless of a DU or a CU, but where to route the control message in an actual transmission network is a separate issue.

It is possible to configure information about a physical IP address, a list of services provided by an NF is, and a service to be called and sent among the services, based on the type of the NF type and the ID of the NF.

In a case of distinguishing a message with an SRB or an RLC channel ID, when configuring an SRB or an RLC channel ID for each entity, it is necessary to configure pieces of information about which bearer and which physical address a message is transmitted through and to and a service to be called. Therefore, when initially configuring an SRB, an IP address and a service are configured together in the configuration. After the initial configuration of the SRB, a message transmitted through the SRB may be transmitted directly to the address.

When an NF is changed or routing information is changed, an SRB configuration value may be updated through RRC reconfiguration, and the changed information may be applied by re-updating an IP address and a service during the process.

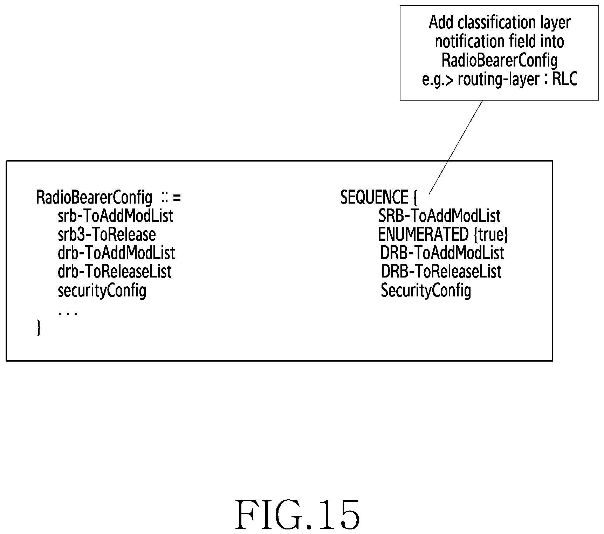

FIG. 15 illustrates an example of RadioBearerConfig in a wireless communication system according to various embodiments of the disclosure.

Referring to FIG. 15, illustrated is an example of a method in which an NW notifies a UE of a classification layer of a control message. When performing the RRC configuration of the UE, the NW transmits information about a layer and a method for performing a function of classifying a control message together in a bearer configuration message. When a control message is classified in an AS layer, a classification method may also be transmitted. For example, information such as "routing-layer: RRC, type: SRB or RRC-IE" may be included in RadioBearerConfig. Since the existing 5G structure uses a fixed classification method according to a hierarchical structure, there is no information about a layer and a method for performing a function of classifying a control message.

The UE establishes a connection with an L3 layer according to the classification layer received from the NW, and classifies and transmits the message.

From the aspect of layers, methods for distinguishing a control message may be divided by layer. A distinguishing method using an RLC channel ID enables an RLC layer to directly distinguish a control message, a distinguishing method using an SRB enables a PDCP layer to distinguish a control message, and a distinguishing method using an RRC message enables an RRC layer to distinguish the destination of a message and route the message. Among the three methods, the network needs to notify the UE of which layer distinguishes a control message.

The embodiment of FIG. 15 proposes adding a field indicating information about which layer of a network distinguishes a control message if the control message is transmitted from a UE when a message for configuring an initial radio bearer is transmitted to the UE and defining a new control message for writing and transmitting the name of the layer.

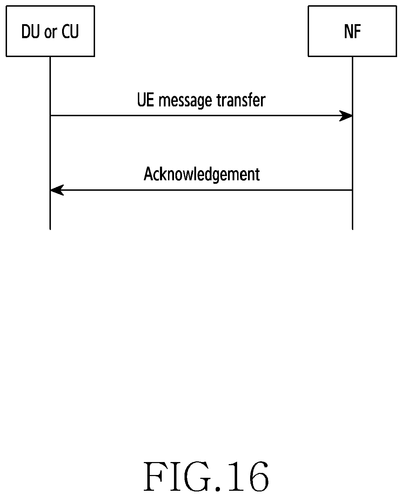

Embodiments of FIG. 16 to FIG. 18 propose a method in which an RAN device in charge of classifying a control message exchanges control messages with NFs or a method for configuring an SRB when PDCP entities in an NW are distributed.

FIG. 16 illustrates an example of a process in which an RAN device in charge of classifying a control message exchanges control messages with NFs in a wireless communication system according to various embodiments of the disclosure.

Referring to FIG. 16, illustrated is a method in which an RAN device in charge of classifying a control message exchanges control messages with NFs. An NW device in which a layer performing classification and transmission of a control message is located and each NF provide a new service for exchanging control messages via an SBI. In the existing 5G structure, an RAN device is unable to communicate with NFs via an SBI. However, in the embodiment of FIG. 16, each NF provides a new message transfer service (e.g., UE message transfer) callable by the RAN device.

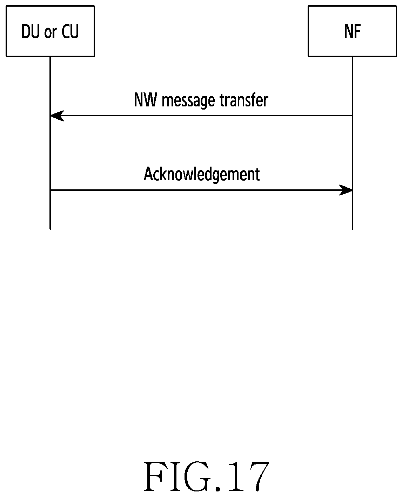

FIG. 17 illustrates an example of a process in which an RAN device in charge of classifying a control message exchanges control messages with NFs in a wireless communication system according to various embodiments of the disclosure.

Referring to FIG. 17, illustrated is a method in which an RAN device in charge of classifying a control message exchanges control messages with NFs. An NW device in which a layer performing classification and transmission of a control message is located and each NF provide a new service for exchanging control messages via an SBI. In the existing 5G structure, an RAN device is unable to communicate with NFs via an SBI. However, in the embodiment of FIG. 17, the RAN device provides a new message transfer service (e.g., NW message transfer) callable by each NF.

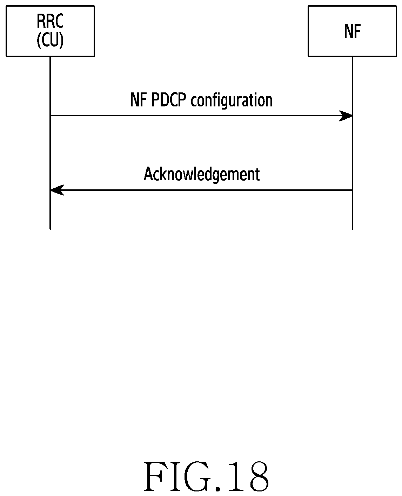

FIG. 18 illustrates an example of a process in which an NF newly provides a PDCP configuration service (e.g., NF PDCP configuration) callable by an RAN device in a wireless communication system according to various embodiments of the disclosure.

Referring to FIG. 18, illustrated is a method for configuring an SRB when PDCP entities in an NW are distributed. When a PDCP entity in charge of an SRB is located in each NF, the NF provides a new service for performing PDCP configuration for an RAN device (CU in 5G) in charge of SRB configuration. Each NF newly provides a PDCP configuration service (e.g., NF PDCP configuration) callable by the RAN device.

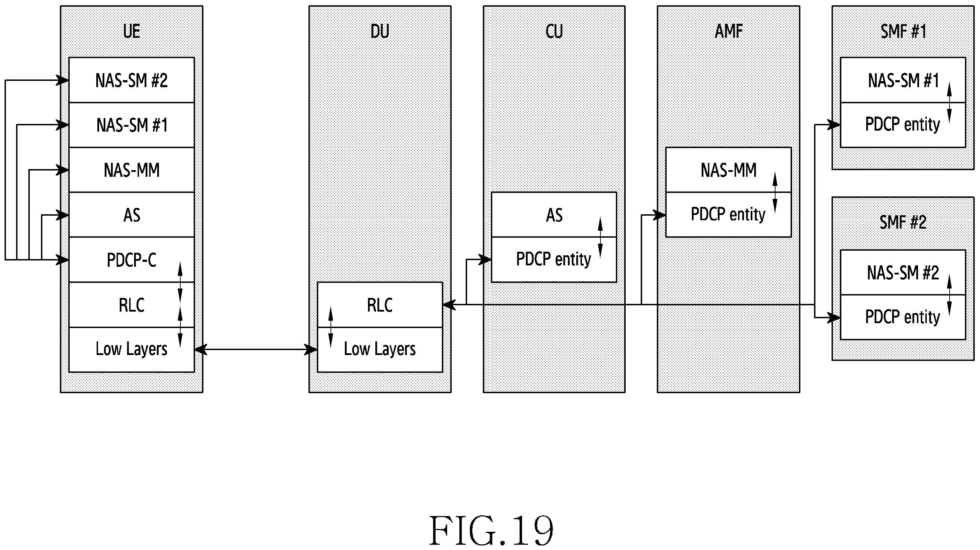

FIG. 19 illustrates an example of a process in which an RLC (DU) distinguishes and transmits AS/NAS messages by using an SRB in a wireless communication system according to various embodiments of the disclosure.

Referring to FIG. 19, proposed is a method in which an RLC (DU) distinguishes and transmits AS/NAS messages by using an SRB. In the embodiment of FIG. 19, it is assumed that a device (DU in 5G) including the RLC of an RAN device is connectable to another NF through an SBI.

Referring to FIG. 19, a PDCP layer allocates a dedicated SRB for all L3 connections. When configuring an SRB, an RRC layer also configures routing information for each SRB together in a unit of SRB. When receiving a higher-layer control message, a PDCP layer of a UE transmits the message to a lower layer through a corresponding SRB. An RLC layer of the UE transmits the message received from the PDCP to an NW through the lower layer. An RLC layer of the NW identifies the address and service of an NF according to the configured routing information, and calls the corresponding service through the SBI to transmit the message to a PDCP layer located in the NF. The RLC layer of the NW transmits a control message received from the PDCP layer of the NF to the UE through a specified logical channel.

The embodiment of FIG. 19 is a method for distinguishing a control message by using an RLC channel ID. From the perspective of the UE, the PDCP layer directly connects to all higher control layers including an AS to exchange messages. The PDCP layer immediately knows which layer the message is transmitted from, and allocates an SRB and an RLC channel ID accordingly to transmit the message to the network, and since an IP address is allocated for the SRB and the RLC channel ID, the network routes each message to each located PDCP layer. Accordingly, in this structure, the DU may classify all messages at a time. Each PDCP entity is linked to a dedicated SRB, and may thus transmit the message to a control layer located immediately above on the network side.

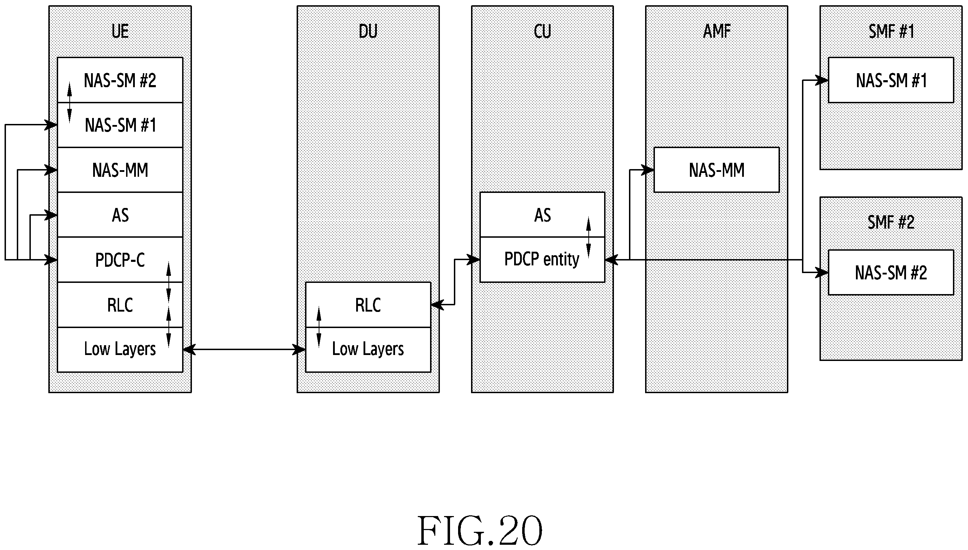

FIG. 20 illustrates an example of a process in which a PDCP (CU) distinguishes and transmits AS/NAS messages by using an SRB in a wireless communication system according to various embodiments of the disclosure.

Referring to FIG. 20, proposed is a method in which a PDCP (CU) distinguishes and transmits AS/NAS messages by using an SRB. In the embodiment of FIG. 20, it is assumed that a device (CU in 5G) including the PDCP of an RAN device is connectable to another NF through an SBI.

Referring to FIG. 20, a PDCP layer allocates a dedicated SRB for each L3. When configuring an SRB, an RRC layer also configures routing information for each SRB in a unit of RLC channel. A PDCP layer of a UE receives a control message of a higher layer through each SRB, selects an RLC channel according to information provided by the higher layer, and transmits the message to an NW. A PDCP layer of the NW identifies the address and service of the NF configured for each logical channel, and calls the service through the SBI to transmit the message. The PDCP layer of the NW transmits a control message received from the NF to the UE through a specified logical channel.

The embodiment of FIG. 20 is a method for distinguishing a control message by using only an SRB. The embodiment of FIG. 20 is different from the embodiment of FIG. 19 as follows. According to the embodiment of FIG. 20, compared to the existing 5G structure, routing is commonly performed up to RLC and PDCP entities on the network side, and a PDCP entity performs routing according to where each higher control layer is located.

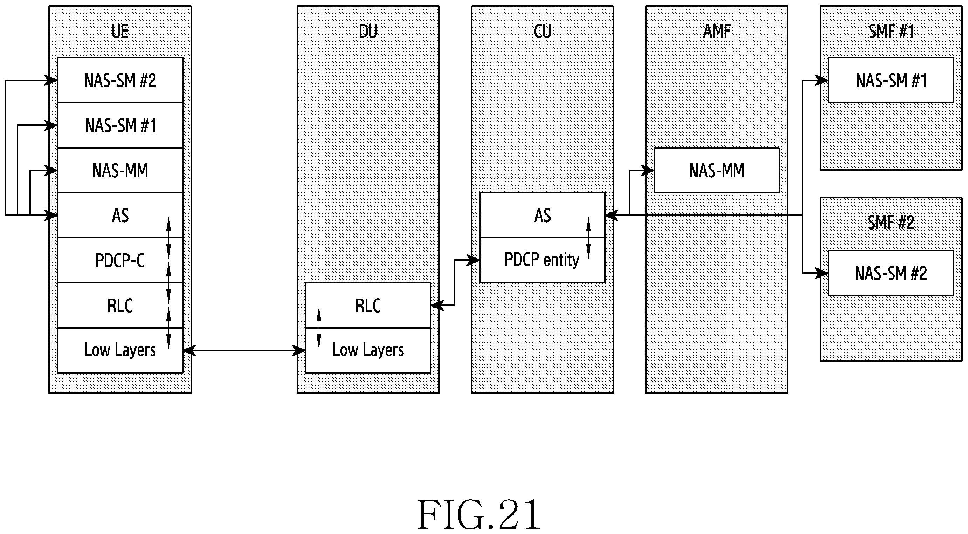

FIG. 21 illustrates an example of a process in which an RRC (CU) distinguishes and transmits NAS messages by using an SRB in a wireless communication system according to various embodiments of the disclosure.

Referring to FIG. 21, proposed is a method in which an RRC (CU) distinguishes and transmits NAS messages by using an SRB. In the embodiment of FIG. 21, it is assumed that a device (CU in 5G) including an RRC of an RAN device is connectable to another NF through an SBI.

Referring to FIG. 21, a PDCP layer allocates a dedicated SRB for all L3 connections to an AS layer. Each NAS layer exchanges control messages through the AS layer. When receiving a message from a higher control layer, an AS layer of a UE transmits the message to an NW through a dedicated SRB for each layer. An AS layer of the NW calls a corresponding service through the SBI according to routing information configured for each SRB through which the control message is transmitted, and transmits the message. The AS layer of the NW transmits a control message received from the NF to the UE through a specified SRB.

The embodiment of FIG. 21 is a method for distinguishing a message by using only an RRC message. The embodiment of FIG. 21 is different from the embodiment of FIG. 19 as follows. In the embodiment of FIG. 19, the entity distinguishes messages at a time by placing AS and NAS layers as the same layer. In the embodiment of FIG. 21, all messages are equally routed up to the AS layer. Here, according to a difference from the existing 5G structure, all messages routed to a core are routed to the NAS-MM and are divided in the NAS-MM in the existing 5G structure, whereas both the AS and the NAS perform routing up to the RRC but the RRC transmits core messages to the final destination at once without going through the AMF in the embodiment of FIG. 21.

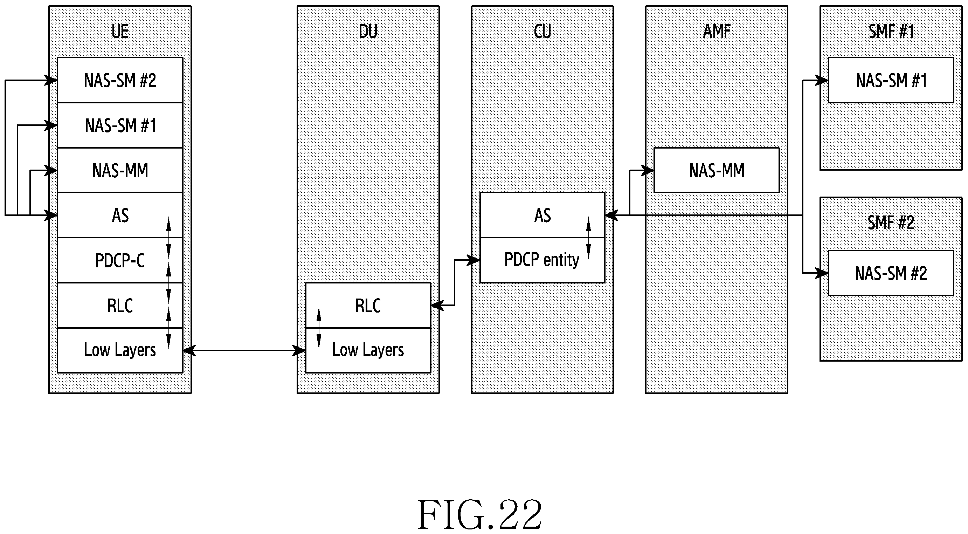

FIG. 22 illustrates an example of a process in which an RRC (CU) distinguishes and transmits NAS messages by using an RRC IE in a wireless communication system according to various embodiments of the disclosure.

Referring to FIG. 22, proposed is a method in which an RRC (CU) distinguishes and transmits NAS messages by using an RRC IE. In the embodiment of FIG. 22, it is assumed that a device (CU in 5G) including an RRC of an RAN device is connectable to another NF through an SBI.

Referring to FIG. 22, an AS layer provides a separate service access point (SAP) for all NAS layers. When receiving a message from an NAS layer, an AS layer of a UE transmits the message to an NW through an SRB for NAS message transmission. Here, an information element (IE) specifying which layer message a message transmitted in the RRC message corresponds to is transmitted. When receiving the NAS message, an AS layer of the NW distinguishes the NAS layer through the RRC IE, and calls a corresponding service through the SBI according to routing information configured for each layer to transmit the message.

The embodiment of FIG. 22 has the same structure as the embodiment of FIG. 21.

However, in the embodiment of FIG. 21, when an SRB is applied to distinguish a message in the RRC layer, an SRB through which a message is routed when the PDCP routes the message may be notified.

In the embodiment of FIG. 22, information about a destination and which layer a message belongs to may be indicated in a message field in an RRC message and transmitted, without using an SRB.

According to various embodiments of the disclosure, there is provided an operating method of a radio access network (RAN) including a distributed unit (DU) and a centralized unit (CU) in a wireless communication system, the DU including a radio link control (RLC) and the CU including a radio resource control (RRC), the method including: establishing an RRC connection with a user equipment (UE); transmitting a non-access stratum (NAS) connection establishment request message including information about the UE to an access mobility function (AMF); receiving initial configuration information including routing information about network functions (NFs) corresponding to the UE from the AMF, the NFs including the AMF, a session management function (SMF), and a policy control function (PCF); transmitting RRC connection reconfiguration information including the routing information about the NFs corresponding to the UE to the UE; receiving a control message including address information about one NF among the NFs from the UE through the DU; and transmitting the control message to the NF.

According to various embodiments of the disclosure, the operating method of the RAN may further include allocating, by the CU, dedicated SRBs for all layer-3 (L3) connections, each of the dedicated SRBs corresponding to each L3 connection, wherein the RRC connection reconfiguration information may further include an SRB configuration for the allocated dedicated SRBs, the control message may further include one dedicated SRB among the dedicated SRBs, and the control message is transmitted to a layer corresponding to the dedicated SRB without going through the AMF when the destination information corresponds to the SMF and the PCF.

According to various embodiments of the disclosure, the dedicated SRBs may be identified by an arbitrary number allocated by the CU, or may be identified by fixed numbers for some SRBs and arbitrary numbers additionally allocated by the CU.

According to various embodiments of the disclosure, the operating method of the RAN may further include allocating, by the DU, RLC channel identifiers (RCIDs) for the dedicated SRBs, wherein the SRB configuration may include information about the RCIDs, the control message may further include one RCID among the RCIDs, and the L3 connections may be identified based on the dedicated SRBs and the RCIDs.

According to various embodiments of the disclosure, an SRB configuration may include information about a physical Internet Protocol (IP) address of NFs for the respective dedicated SRBs and information about a service corresponding to each of the NFs.

According to various embodiments of the disclosure, the operating method of the RAN may further include identifying the address of the NF configured for each logical channel, based on the control message, and the information about the service corresponding to the NF, transmitting the control message to the NF corresponding to the service through a service-based interface (SBI), receiving a response message corresponding to the control message from the NF, and transmitting the response message to the UE through a specified logical channel.

According to various embodiments of the disclosure, the routing information may be configured in a unit of SRB or RLC channel.

According to various embodiments of the disclosure, there is provided a radio access network (RAN) including a distributed unit (DU) and a centralized unit (CU) in a wireless communication system, the DU including a radio link control (RLC) and the CU including a radio resource control (RRC), the RAN including a transceiver and at least one processor functionally connected to the transceiver, wherein the at least one processor is configured to perform an operating method of a radio access network (RAN) according to various embodiments of the disclosure.

According to various embodiments of the disclosure, there is provided an operating method of a user equipment (UE) in a wireless communication system, the method including: establishing a radio resource control (RRC) connection with a radio access network (RAN); receiving RRC connection reconfiguration information including routing information about network functions (NFs) corresponding to the UE from the RAN, the NFs including the access mobility function (AMF), a session management function (SMF), and a policy control function (PCF); and transmitting a control message including address information about one NF among the NFs to the RAN.

According to various embodiments of the disclosure, the RRC connection reconfiguration information may further include an SRB configuration for dedicated SRBs allocated for all layer-3 (L3) connections, the dedicated SRBs correspond to the L3 connections, respectively, the control message may further include one dedicated SRB among the dedicated SRBs, and the control message may be transmitted to a layer corresponding to the dedicated SRB without going through the AMF when the destination information corresponds to the SMF and the PCF.

According to various embodiments of the disclosure, the dedicated SRBs may be identified by an arbitrary number allocated by the CU, or may be identified by fixed numbers for some SRBs and arbitrary numbers additionally allocated by the CU.

According to various embodiments of the disclosure, the SRB configuration may include information about RLC channel identifiers (RCIDs) for the dedicated SRBs, the control message may further include one RCID among the RCIDs, and the L3 connections may be identified based on the dedicated SRBs and the RCIDs.

According to various embodiments of the disclosure, an SRB configuration may include information about a physical Internet Protocol (IP) address of NFs for the respective dedicated SRBs and information about a service corresponding to each of the NFs.

According to various embodiments of the disclosure, the routing information may be configured in a unit of SRB or RLC channel.

According to various embodiments of the disclosure, there is provided a user equipment (UE) in a wireless communication system, the UE including a transceiver and at least one processor functionally connected to the transceiver, wherein the at least one processor is configured to perform an operating method of a UE according to various embodiments of the disclosure.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, local area network (LAN), wide LAN (WLAN), and storage area network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

### [Industrial Applicability]

The disclosure generally relates to a wireless communication system and, more particularly, to a method and an apparatus for reducing transmission overhead and delay of a control plane in a wireless communication system.

## Claims

1. An operating method of a radio access network (RAN) comprising a distributed unit (DU) and a centralized unit (CU) in a wireless communication system, the DU comprising a radio link control (RLC) and the CU comprising a radio resource control (RRC), the method comprising:
establishing an RRC connection with a user equipment (UE);
transmitting a non-access stratum (NAS) connection establishment request message comprising information about the UE to an access mobility function (AMF);
receiving initial configuration information comprising routing information about network functions (NFs) corresponding to the UE from the AMF, the NFs comprising the AMF, a session management function (SMF), and a policy control function (PCF);
transmitting RRC connection reconfiguration information comprising the routing information about the NFs corresponding to the UE to the UE;
receiving a control message comprising address information about one NF among the NFs from the UE through the DU; and
transmitting the control message to the NF.

2. The method of claim 1, further comprising allocating, by the CU, dedicated SRBs for all layer-3 (L3) connections, each of the dedicated SRBs corresponding to each L3 connection,
wherein the RRC connection reconfiguration information further comprises an SRB configuration for the allocated dedicated SRBs,
wherein the control message further comprises one dedicated SRB among the dedicated SRBs, and
wherein the control message is transmitted to a layer corresponding to the dedicated SRB without going through the AMF when destination information corresponds to the SMF and the PCF.

3. The method of claim 2, wherein the dedicated SRBs are identified by an arbitrary number allocated by the CU, or are identified by fixed numbers for some SRBs and arbitrary numbers additionally allocated by the CU.

4. The method of claim 2, further comprising allocating, by the DU, RLC channel identifiers (RCIDs) for the dedicated SRBs,
wherein the SRB configuration comprises information about the RCIDs,
wherein the control message further comprises one RCID among the RCIDs, and
wherein the L3 connections are identified based on the dedicated SRBs and the RCIDs.

5. The method of claim 1, wherein an SRB configuration comprises information about a physical Internet Protocol (IP) address of NFs for respective dedicated SRBs and information about a service corresponding to each of the NFs.

6. The method of claim 5, further comprising:
identifying the address of the NF configured for each logical channel, based on the control message, and the information about the service corresponding to the NF;
transmitting the control message to the NF corresponding to the service through a service-based interface (SBI);
receiving a response message corresponding to the control message from the NF; and
transmitting the response message to the UE through a specified logical channel.

7. The method of claim 1, wherein the routing information is configured in a unit of SRB or RLC channel.

8. A radio access network (RAN) comprising a distributed unit (DU) and a centralized unit (CU) in a wireless communication system, the DU comprising a radio link control (RLC) and the CU comprising a radio resource control (RRC), the RAN comprising:
a transceiver; and
at least one processor functionally connected to the transceiver,
wherein the at least one processor is configured to:
establish an RRC connection with a user equipment (UE);
transmit a non-access stratum (NAS) connection establishment request message comprising information about the UE to an access mobility function (AMF);
receive initial configuration information comprising routing information about network functions (NFs) corresponding to the UE from the AMF, the NFs comprising the AMF, a session management function (SMF), and a policy control function (PCF);
transmit RRC connection reconfiguration information comprising the routing information about the NFs corresponding to the UE to the UE;
receive a control message comprising address information about one NF among the NFs from the UE through the DU; and
transmit the control message to the NF.

9. The RAN of claim 8, further comprising allocating, by the CU, dedicated SRBs for all layer-3 (L3) connections, each of the dedicated SRBs corresponding to each L3 connection,
wherein the RRC connection reconfiguration information further comprises an SRB configuration for the allocated dedicated SRBs,
wherein the control message further comprises one dedicated SRB among the dedicated SRBs, and
wherein the control message is transmitted to a layer corresponding to the dedicated SRB without going through the AMF when destination information corresponds to the SMF and the PCF.

10. The RAN of claim 9, wherein the dedicated SRBs are identified by an arbitrary number allocated by the CU, or are identified by fixed numbers for some SRBs and arbitrary numbers additionally allocated by the CU.

11. The RAN of claim 9, wherein the at least one processor is further configured to allocate, by the DU, RLC channel identifiers (RCIDs) for the dedicated SRBs,
wherein the SRB configuration comprises information about the RCIDs,
wherein the control message further comprises one RCID among the RCIDs, and
wherein the L3 connections are identified based on the dedicated SRBs and the RCIDs.

12. The RAN of claim 8, wherein an SRB configuration comprises information about a physical Internet Protocol (IP) address of NFs for respective dedicated SRBs and information about a service corresponding to each of the NFs.

13. The RAN of claim 12, wherein the at least one processor is further configured to:
identify the address of the NF configured for each logical channel, based on the control message, and the information about the service corresponding to the NF;
transmit the control message to the NF corresponding to the service through a service-based interface (SBI);
receive a response message corresponding to the control message from the NF; and
transmit the response message to the UE through a specified logical channel.

14. The RAN of claim 8, wherein the routing information is configured in a unit of SRB or RLC channel.

15. An operating method of a user equipment (UE) in a wireless communication system, the method comprising:
establishing a radio resource control (RRC) connection with a radio access network (RAN);
receiving RRC connection reconfiguration information comprising routing information about network functions (NFs) corresponding to the UE from the RAN, the NFs comprising an access mobility function (AMF), a session management function (SMF), and a policy control function (PCF); and
transmitting a control message comprising address information about one NF among the NFs to the RAN.
